# EUROPÄISCHE PATENTSCHRIFT

(11) **EP 4 052 559 B1**
(45) Veröffentlichungstag und Bekanntmachung des Hinweises auf die Patenterteilung: **11.09.2024**
(21) Anmeldenummer: 21210775.9
(22) Anmeldetag: 26.11.2021
(51) Int. Cl.: A01D 43/08

(54) **VERFAHREN ZUR ERKENNUNG VON LÄNGEN EINES PARTIKELS**
METHOD FOR DETECTING LENGTHS OF A PARTICLE
PROCÉDÉ DE DÉTECTION DES LONGUEURS D'UNE PARTICULE

(30) Priorität: 04.03.2021 DE 102021105274
(43) Veröffentlichungstag der Anmeldung: 07.09.2022
(73) Patentinhaber: CLAAS E-Systems GmbH, 49201 Dissen (DE)
(72) Erfinder: Rasmussen, Christoffer, 2100 København Ø (DK); Kirk, Kristian, 2100 Kopenhagen (DK); Moeslund, Thomas B., 8800 Viborg (DK); Belau, Sven Carsten, 33332 Gütersloh (DE); Fischer, Frédéric, 59759 Arnsberg (DE)
(74) Vertreter: CLAAS Gruppe

(56) Entgegenhaltungen:
- EP-B1- 2 098 109
- US-A1- 2005 102 079
- US-A1- 2012 123 650
- US-A1- 2016 029 561

## Beschreibung

Die Erfindung betrifft ein Verfahren zur Erkennung von Längen eines Partikels in einem aus Partikeln bestehendem Erntegutstrom bei einer landwirtschaftlichen Erntemaschine gemäß dem Oberbegriff von Anspruch 1, eine landwirtschaftliche Erntemaschine gemäß Anspruch 16.

Der Einsatz von Kamerasystemen zur Detektion von, eine landwirtschaftliche Erntemaschine durchlaufenden Gutströmen ist im Stand der Technik bereits umfassend beschrieben. So offenbart beispielsweise die EP 2 098 109 eine als Feldhäcksler ausgeführte Erntemaschine, in welcher ein Erntegutstrom mittels eines Kamerasystems aufgenommen wird und die generierten Bilder sodann einer Analyse unterzogen werden, um die Teilchengröße der in den Bildern aufgenommenen Partikel, zu ermitteln. Die Größe der Partikel wird im Wesentlichen davon bestimmt, wie intensiv das Erntegut mittels der Häckseltrommel und einer dieser nachgeordneten Zerkleinerungseinrichtung, eines sogenannten Corncrackers, zerkleinert wird. Die auf diese Weise ermittelte Häckselgutlänge wird sodann genutzt, um diese mit der voreingestellten sogenannten theoretischen Häcksellänge zu vergleichen und bei signifikanter Abweichung nachzuregeln. Dieses Nachregeln kann auf unterschiedliche Weise erfolgen. Indem die Zuführgeschwindigkeit des Erntegutes zur Häckseltrommel und/oder die Drehzahl der Häckseltrommel geändert werden kann bewirkt werden, das ein intensiverer oder weniger intensiver Häckselprozess eine Änderung der Partikelgröße bewirkt. Der gleiche Effekt tritt ein, wenn die Intensität der Zerkleinerung durch den Corncracker intensiviert oder reduziert wird, indem der Crackerspalt oder die Crackerspalte verkleinert oder vergrößert werden.

In US2016/0029561 ist beispielsweise ein Verfahren beschrieben, welches kamerabasiert den Zerkleinerungsgrad von Maiskörnern in einem Erntegutstrom ermittelt und in Abhängigkeit von dem ermittelten Zerkleinerungsgrad sodann eine Änderung der Zerkleinerungsintensität des Corncrackers in der Weise bewirkt, dass der Crackerspalt entweder vergrößert oder verkleinert wird. Dokument US 2012/123650 A1 beschreibt ein weiteres bekanntes Verfahren zum Erkennen von Längen eines Partikels in einem Erntegutstrom.

Übergroße Partikel von gehäckseltem Erntegut in der Maissilage haben für einen Landwirt erhebliche Nachteile. Solche Partikel können die Silagefutterqualität für Milchkühe herabsetzen und durch entstehende Lufteinschlüsse die Bildung von Schimmelpilzen während der Lagerung fördern. Die Länge der Erntegutpartikel hängt maßgeblich von den Einsatzbedingungen des Landwirts ab und wird weitgehend durch die Einstellung der theoretischen Schnittlänge am Feldhäcksler gesteuert, die die gewünschte Partikelgröße definiert. Da ein Feldhäcksler Hunderte von Tonnen pro Stunde ernten kann, ist ein effizientes und robustes System zur Messung der Qualität auf dem Feld erforderlich. Die aus dem Stand der Technik bekannten Methoden erfordern jedoch oft noch immer manuelle, fehleranfällige Trennschritte oder den Versand von Proben an ein externes Labor, was wiederum zu langen Wartezeiten führt bis die Auswertergebnisse vorliegen.

Der Erfindung liegt das Problem zu Grunde, das bekannte Verfahren zur Erkennung von Längen eines Partikels derart auszugestalten und weiterzubilden, dass die Detektionsgenauigkeit verbessert und/oder eine Rechenintensität reduziert wird.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, das herkömmliche Verfahren der Bildverarbeitung bei chaotischen und inhomogenen Gutströmen schnell an ihre Grenzen gelangen. Der Einsatz eines Maschinenlernverfahrens kann die Klassifizierung von Partikeln auch bei chaotischen Gutströmen verbessern, die Klassifizierung aller Partikel in einem Bild ist jedoch in den meisten Anwendungsfällen mit einer realistischen Rechenleistung nicht in Echtzeit möglich. Im landwirtschaftlichen Alltag ist das Bestimmen eines vollständigen Größenhistogramms aller Partikellängen jedoch zumeist gar nicht notwendig. Es wurde erkannt, dass die Anwendung eines Maschinenlernverfahrens, insbesondere in Echtzeit, deutlich weniger rechenintensiv ist, wenn nicht versucht wird, alle Partikel in einem Bild zu erkennen. Vorliegend steht daher die Erkennung von Partikeln mit Überlänge im Fokus.

Speziell Partikel mit Überlänge haben bei der Silage und der Fütterung von Nutztieren einen starken negativen Effekt. Vorliegend wird daher vorgeschlagen, bei einer landwirtschaftlichen Erntemaschine mittels einer Recheneinheit in einer Analyseroutine Bilder des Erntegutstroms zu analysieren und mittels dieser Analyse Partikellängen von in den Bildern enthaltenen Partikeln des Erntegutstroms abzuleiten. Dabei wird ein Maschinenlernverfahren verwendet, das speziell auf das Finden von Partikeln mit Überlänge trainiert ist. Im Gegensatz zu herkömmlichen Verfahren der Bildverarbeitung, die das gesamte Bild analysieren, wird so bereits sehr früh ein Großteil der Fläche des Bildes aussortiert, so dass die rechenintensiven Operationen deutlich seltener durchgeführt werden. Dadurch wird das Verfahren günstiger in der Anwendung und prinzipiell echtzeitfähig.

Im Einzelnen wird vorgeschlagen, dass die in der Analyseroutine abgeleitete Partikellänge eine Überlänge ist und dass die Analyseroutine auf einem auf das Finden von Partikeln mit Überlänge trainiertem Maschinenlernverfahren basiert, dass die Recheneinheit in der Analyseroutine eine Menge an Partikeln mit Überlänge ermittelt.

Interessant dabei ist weiterhin, dass auch der Trainingsaufwand reduziert werden kann. Insbesondere bei einem Training mittels manueller Annotationen müssen durch den Fokus auf überlange Partikel deutlich weniger Partikel pro Bild annotiert werden. So werden zwar mehr Bilder benötigt, um das Maschinenlernverfahren zu trainieren, dieses kann jedoch schneller spezifisch trainiert werden.

Anspruch 2 betrifft die weitere Verwendung der erkannten Menge an Partikeln mit Überlänge, die einem Benutzer angezeigt und/oder zur Einstellung von Maschinenparametern genutzt werden kann. Dies ermöglicht eine schnelle Korrektur fehlerhafter Einstellungen, die zu überlangen Partikeln führen.

Die Ansprüche 3 bis 5 betreffen die bevorzugte Verwendung des Verfahrens bei einem Feldhäcksler, der besonders von der Überlängenproblematik betroffen ist.

Bei einer Ausgestaltung gemäß Anspruch 6 kann vorgesehen sein, dass mindestens ein Maschinenparameter der landwirtschaftlichen Erntemaschine mittels der Menge an erkannten Partikeln mit Überlänge geregelt wird. So wird ein Benutzer entlastet und ein konstantes Ergebnis erzielt.

Gemäß Anspruch 7 kann vorgesehen sein, dass die Analyseroutine einen Vorschlagsschritt und gegebenenfalls einen Klassifikationsschritt umfasst. Durch die Trennung der Analyseroutine in einem Vorschlagsschritt, der vorzugsweise mit wenig Rechenleistung Vorschlagsregionen identifiziert, die potentiell Partikel mit Überlänge enthalten und einen Klassifikationsschritt, der insbesondere nur diese Regionen analysiert, können im Klassifikationsschritt komplexere Berechnungen durchgenommen werden, da dieser nur auf wenige Ausschnitte des Bildes angewendet wird. Eine weitere Effizienzsteigerung ergibt sich, wenn der Klassifikationsschritt teilweise Berechnungen des Vorschlagsschritts wiederverwendet.

Bei der bevorzugten Ausgestaltung gemäß Anspruch 8 basiert die Analyseroutine auf einem trainierten neuronalen Netzwerk als Maschinenlernverfahren, das vorzugsweise ein neuronales Faltungsnetzwerk ist. Neuronale Faltungsnetzwerke erzielen in der Bildverarbeitung besonders gute Ergebnisse. In einer besonders bevorzugten Ausgestaltung ist dabei vorgesehen, dass der Vorschlagsschritt und/oder der Klassifikationsschritt auf einem trainierten neuronalen Netzwerk basieren und vorzugsweise teilweise dasselbe trainierte neuronale Netzwerk verwenden.

Die Ansprüche 9 und 10 betreffen bevorzugte Ausgestaltungen des Vorschlagsschritts und des Klassifikationsschritts. Das ermöglicht eine gute Kombination aus Effizienz und Genauigkeit. Anspruch 10 betrifft dabei weiterhin die Möglichkeit, eine Klasse mit akzeptablen Partikeln mit Überlängen vorzusehen. Dies ist insbesondere dann interessant, wenn gewisse Überlängen systematisch durch den Prozess bedingt sind und nicht oder nur sehr schlecht verhindert werden können.

Anspruch 11 gibt bevorzugte Definitionen der Überlänge an. Diese sind abhängig von normalen Streuungen der Partikellängen und dem negativen Effekt längerer Partikel gewählt.

Es kann der Fall sein, dass in unterschiedlichen Prozessen unterschiedliche Längen von Partikeln als überlang eingestuft werden. Es hat sich dabei herausgestellt, dass die Genauigkeit des Verfahrens erhöht wird, wenn das Maschinenlernverfahren jeweils nur auf einen Bereich der Überlänge trainiert wird. Entsprechend kann gemäß Anspruch 12 vorgesehen sein, dass die Recheneinheit aus mindestens zwei trainierten Maschinenlernverfahren, die jeweils auf unterschiedliche Überlängenbereiche trainiert sind, auswählt.

Die Ansprüche 13 bis 15 betreffen bevorzugte Ausgestaltungen eines Trainingsschritts des Maschinenlernverfahrens. Dabei können gemäß Anspruch 13 annotierte Bilder des Erntegutstroms zum Einsatz kommen und es kann vorzugsweise entweder ein allgemeines Training mit anschließendem spezifischem Training für mehrere Trainingsdatensätze oder jeweils nur ein spezifisches Training durchgeführt werden. Auch eine Kombination, wobei einige Trainingsdatensätze erst allgemein und dann spezifisch und andere Trainingsdatensätze direkt spezifisch trainiert werden, ist möglich. Dies trägt dem Umstand Rechnung, dass bei unterschiedlichen Definitionen von Überlänge auch systematische Unterschiede zwischen den Partikeln bestehen können, die keineswegs nur einer Skalierung der Partikel gleichkommen. Insbesondere eine Homogenität eines Partikels wird bei längeren Partikeln häufig sinken.

Anspruch 14 betrifft das Training von Ankerboxen, wobei vorzugsweise ein Clustering-Verfahren als Ausgangspunkt für das Training der Ankerboxen verwendet wird. Anspruch 15 betrifft die Möglichkeit, weiterhin unterschiedliche Trainingsdatensätze abhängig von einer Pflanzenart und/oder einer Ernteperiode und/oder einem Erntewetter zu erzeugen. So kann eine erhöhte Genauigkeit bei der Erkennung der Partikel mit Überlänge erreicht werden, ohne den Rechenaufwand während der Nutzung des Verfahrens zu erhöhen.

Nach einer weiteren Lehre gemäß Anspruch 16, der eigenständige Bedeutung zukommt, wird eine landwirtschaftliche Erntemaschine zu Verwendung in dem vorschlagsgemäßen Verfahren beansprucht. Auf alle Ausführungen zu dem vorschlagsgemäßen Verfahren darf verwiesen werden.

Weiterhin wird ein Datenträger mit einem Trainingsdatensatz zu Verwendung in dem vorschlagsgemäßen Verfahren offenbart. Auf alle Ausführungen zu dem vorschlagsgemäßen Verfahren darf verwiesen werden.

Im Folgenden wird die Erfindung anhand einer lediglich ein Ausführungsbeispiel darstellenden Zeichnung näher erläutert. In der Zeichnung zeigt
- Fig. 1: einen Feldhäcksler, der den bevorzugten Anwendungsfall des vorschlagsgemäßen Verfahrens bildet,
- Fig. 2: schematisch das vorschlagsgemäße Maschinenlernverfahren,
- Fig. 3: schematisch einen Trainingsschritt für das vorschlagsgemäße Verfahren und
- Fig. 4: schematisch die Anwendung des vorschlagsgemäßen Verfahrens.

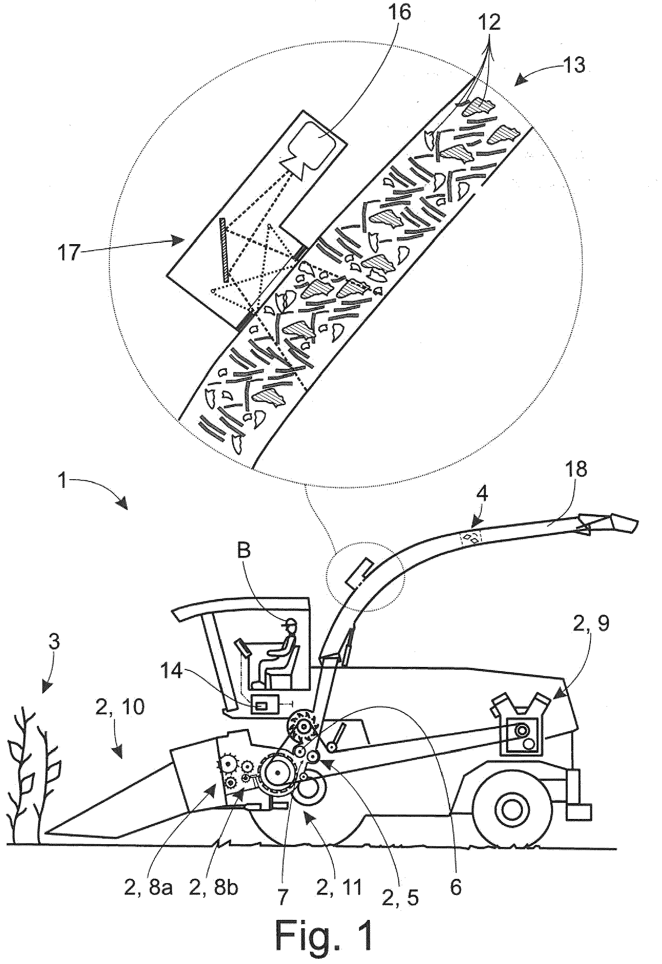

Vorliegend steht die landwirtschaftliche Anwendung des vorschlagsgemäßen Verfahrens im Vordergrund. Für das bessere Verständnis wird daher zuerst der in Fig. 1 dargestellte Feldhäcksler 1 näher beleuchtet, der anschließend als Beispiel für die Anwendung des vorschlagsgemäßen Verfahrens dient.

Der in Fig. 1 dargestellte Feldhäcksler 1 dient zur Durchführung eines Ernteprozesses und weist mindestens ein Arbeitsaggregat 2 zum Abernten eines Feldbestandes 3 und/oder zur Verarbeitung von Erntegut 4 des Feldbestandes 3 im Rahmen des Ernteprozesses auf. Hier und vorzugsweise handelt es sich bei dem Feldbestand 3 um Maispflanzen. Grundsätzlich kann vorgesehen sein, dass der Feldhäcksler 1 den Feldbestand 3 aberntet. Alternativ kann der Feldhäcksler 1 jedoch auch bereits abgeernteten Feldbestand 3 lediglich aufnehmen. Das so gewonnene Erntegut 4 wird sodann von dem Feldhäcksler 1 verarbeitet, insbesondere gehäckselt.

Naturgemäß umfasst das Erntegut 4 hier Kornbestandteile und Nicht-Kornbestandteile. Bei den Kornbestandteilen kann es sich um Maiskörner der Maispflanzen handeln. Die Nicht-Kornbestandteile können dann Blätter, Stängel und dergleichen der Maispflanze sein.

Der Feldhäcksler 1 weist als Arbeitsaggregat 2 vorzugsweise einen Corncracker 5 zum Aufbereiten der Kornbestandteile auf. Das mindestens eine Arbeitsaggregat 2 ist mit Maschinenparametern einstellbar. Mittels dieser Einstellung der Maschinenparameter lässt sich in großem Umfang Einfluss auf die Funktion des Arbeitsaggregats 2 nehmen. Bei den Maschinenparametern kann es sich um diverse denkbare funktionale Parameter des Arbeitsaggregats 2 handeln. Die Maschinenparameter können sehr konkret, beispielsweise einen Strom betreffen oder eher abstrakt eine Fahrtroute des Feldhäckslers 1. Der Begriff "Maschinenparameter" ist somit weit zu verstehen.

Im Betrieb kann der Corncracker 5 das Erntegut 4 zerkleinern. Der Corncracker 5 weist hier zwei Walzen 6 auf, die im Betrieb jeweils mit einer als Maschinenparameter einstellbaren Drehzahl rotieren. Zwischen den Walzen 6 verbleibt ein Spalt 7 mit einer als Maschinenparameter einstellbaren Spaltbreite. Das Erntegut 4 wird im Betrieb des Feldhäckslers 1 durch den Spalt 7 transportiert. Bekannt und ebenso bevorzugt sind auch Feldhäcksler 1 mit mehr als zwei Walzen 6 und/oder mehr als einem Spalt 7. Insbesondere kann der Feldhäcksler 1 drei Walzen 6 und zwei Spalte 7 aufweisen.

Die Walzen 6 weisen bevorzugt eine als Maschinenparameter einstellbare Differenzdrehzahl auf, um die sich die Drehzahl der Walzen 6 unterscheidet. Durch die Differenzdrehzahl der Walzen 6 werden die durch den mindestens einen Spalt 7 zwischen den Walzen 6 hindurchtransportierten Kornbestandteile von den Walzen 6 zerkleinert. Um eine maximale Zerkleinerung und somit eine hohe Aufbereitungsqualität der Kornbestandteile zu erreichen, könnte die Spaltbreite minimal eingestellt werden. Diese Einstellung verbraucht jedoch mehr Energie des Feldhäckslers 1 als nötig.

Der in Fig. 1 dargestellte und insoweit bevorzugte Feldhäcksler 1 weist als Arbeitsaggregat 2 Einzugswalzen 8a und/oder Vorpresswalzen 8b, insbesondere jeweils mit einer als Maschinenparameter einstellbaren Drehzahl, auf. Über diese Drehzahl kann eine Häcksellänge des Ernteguts 4 einstellbar sein. So ergibt sich eine theoretische Schnittlänge TLOC des Häckselgutes auf Basis der physikalischen, variierenden tatsächlichen Häcksellänge. Der Feldhäcksler 1 kann als Arbeitsaggregat 2 zusätzlich oder alternativ einen Motor 9 mit einer als Maschinenparameter einstellbaren Drehzahl zum Antreiben des Feldhäckslers 1 und zur Energieversorgung zumindest eines der weiteren Arbeitsaggregate 2 aufweisen. Weiterhin kann der Feldhäcksler 1 als Arbeitsaggregat 2 ein Vorsatzgerät 10 zum Aufnehmen des Feldbestandes 3 aufweisen. Dieses Aufnehmen kann ein Abernten umfassen. Zusätzlich kann der Feldhäcksler 1 auch Einzugswalzen 8a mit einer als Maschinenparameter einstellbaren Drehzahl in üblicher Art und Weise aufweisen.

Der Feldhäcksler 1 kann als Arbeitsaggregat 2 auch eine Häckseltrommel 11 zum Häckseln des Ernteguts 4 aufweisen. Da die Häckseltrommel 11 häufig direkt mit dem Motor 9 des Feldhäckslers 1 gekoppelt ist, kann es vorgesehen sein, dass die Häcksellänge im Wesentlichen, ohne Änderung der Motordrehzahl, nur über die Vorpresswalzen 8b einstellbar ist. Andere Anordnungen sind jedoch ebenso möglich. Entsprechend kann auch vorgesehen sein, dass die Häcksellänge nur sekundär über die Vorpresswalzen 8b einstellbar ist.

Hier und vorzugsweise wird die theoretische Schnittlänge TLOC konkret über die Drehzahl der Einzugswalzen 8a und/oder die Drehzahl der Vorpresswalzen 8b und/oder einen Anpressdruck der Vorpresswalzen 8b und/oder eine Drehzahl der Häckseltrommel 11 eingestellt. Zusätzlich oder alternativ wird die theoretische Schnittlänge TLOC vorzugsweise über eine Anzahl von Häckselmessern der Häckseltrommel 11 eingestellt, wobei die Häckseltrommel 11 austauschbar sein kann. Die ebenfalls einstellbare Drehzahl der Walzen 6 des Corncrackers 5 und der Spalt 7 haben hier und vorzugsweise einen vernachlässigbaren indirekten Einfluss auf die theoretische Schnittlänge TLOC und dienen daher nicht zu deren Einstellung. Andere Anordnungen sind denkbar und grundsätzlich bekannt.

Vor diesem Hintergrund kann das vorschlagsgemäße Verfahren zur Erkennung von Längen eines Partikels 12 in einem aus Partikeln 12 bestehenden Erntegutstrom 13 mittels einer Recheneinheit 14 bei einer landwirtschaftlichen Erntemaschine nun näher erläutert werden.

Die landwirtschaftliche Erntemaschine weist mindestens ein Arbeitsaggregat 2 zum Abernten eines Feldbestandes 3 und/oder zur Verarbeitung von Erntegut 4 des Feldbestandes 3 auf, wobei mindestens ein Arbeitsaggregat 2 mit Maschinenparametern einstellbar ist.

Dabei ist es so, dass das Erntegut 4 im Betrieb einer landwirtschaftlichen Erntemaschine, insbesondere des Feldhäckslers 1, als Erntegutstrom 13 durch die landwirtschaftliche Erntemaschine 1 transportiert wird. Bei den Partikeln 12 kann es sich nicht beschränkend um Kornbestandteile und Nicht-Kornbestandteile handeln, die von dem Feldhäcksler 1 zerkleinert wurden.

Die landwirtschaftliche Erntemaschine weist eine Kamera 16 auf, die Bilder 15 des Erntegutstroms 13 aufnimmt. Die Recheneinheit 14 ist eingerichtet, die Bilder 15 des Erntegutstroms 13 in einer Analyseroutine zu analysieren und mittels dieser Analyse Partikellängen von in den Bildern 15 enthaltenen Partikeln 12 des Erntegutstroms 13 abzuleiten.

Die Recheneinheit 14 kann Teil der landwirtschaftlichen Erntemaschine und/oder cloudbasiert sein.

Wesentlich ist nun, dass die in der Analyseroutine abgeleitete Partikellänge L eine Überlänge U ist, dass die Analyseroutine auf einem auf das Finden von Partikeln 12 mit Überlänge U trainierten Maschinenlernverfahren basiert und dass die Recheneinheit in der Analyseroutine eine Menge an Partikeln mit Überlänge U ermittelt. Es wird also vorschlagsgemäß ein Maschinenlernverfahren verwendet, das spezifisch auf das Finden von Partikeln 12 mit Überlänge U trainiert wurde. Dabei können natürlich Partikel 12 ohne Überlänge U zum Teil zwischenzeitlich erkannt und dann aussortiert werden oder dergleichen, jedoch werden Partikel 12 ohne Überlänge U nicht systematisch erkannt. Insbesondere werden nicht erst alle Partikel 12 identifiziert und erkannt und anschließend nur die mit Überlänge U analysiert. Vielmehr ist das Maschinenlernverfahren so trainiert, dass es primär nach Partikeln 12 mit Überlänge U sucht. Dadurch wird der Rechenaufwand des Maschinenlernverfahrens gegenüber einem Verfahren, das alle Partikel analysiert, reduziert.

Hier und vorzugsweise ist vorgesehen, dass eine Menge an Partikeln 12 mit Überlänge U absolut oder relativ ermittelt wird. Sofern ein Anteil der Partikel 12 mit Überlänge U an einer Gesamtmenge an Partikeln 12 ermittelt wird, werden dafür vorzugsweise Schätzwerte für die Gesamtmenge an Partikeln 12 genutzt. Auch ein rudimentärer Bilderkennungsalgorithmus zum Zählen der Gesamtmenge an Partikeln 12 ist jedoch grundsätzlich denkbar.

Vorliegend ist es bevorzugt so, dass die Recheneinheit 14 basierend auf der Menge an Partikeln mit Überlänge U mindestens einen Maschinenparameter der landwirtschaftlichen Erntemaschine einstellt und/oder die Menge an Partikeln mit Überlänge U einem Benutzer B anzeigt und/oder dokumentiert. Die Anzeige kann beispielsweise auf einem Terminal der landwirtschaftlichen Erntemaschine erfolgen.

Ein weiterer in diesem Zusammenhang interessanter Aspekt, ist, dass die Kamera 16 hier und vorzugsweise einen vordefinierten Abstand zu dem Erntegutstrom 13 aufweist. Dieser Aspekt hat mehrere Vorteile. Zum einen wird es damit möglich, die Länge L eines Partikels 12 von Pixeln in eine reale Größe umzurechnen. Weiterhin ist es hier und vorzugsweise so, dass eine Architektur des Maschinenlernverfahrens und/oder das Training des Maschinenlernverfahrens den vordefinierten Abstand berücksichtigt. Bei Objekterkennung in der Bildverarbeitung ist es üblicher Weise so, dass viele Skalierungen in Architektur und/oder Training des Maschinenlernverfahrens berücksichtigt werden, da nicht klar ist, in welcher Größe die Objekte letztendlich im Bild 15 auftauchen werden. Dieses Problem hat zu diversen Lösungsansätzen geführt, die jedoch im Allgemeinen mit einer erhöhten Rechenkomplexität einhergehen. Vorliegend ist es möglich, diese Komplexität teilweise einzusparen.

In Fig. 1 ist die Kamera 16 zusammen mit einer optionalen Optik 17 am Auswurfkrümmer 18 des Feldhäckslers 1 angeordnet. Andere Anordnungen sind jedoch ebenso denkbar.

Hier und vorzugsweise wird die landwirtschaftliche Erntemaschine, insbesondere der Feldhäcksler 1, basierend auf den gefundenen Partikeln 12 mit Überlänge U gesteuert. Diese Steuerung kann dabei auch eine Regelung sein und betrifft ganz allgemein die Einstellung eines Maschinenparameters.

Vorzugsweise ist es hier weiterhin so, dass der Feldhäcksler 1 als Arbeitsaggregat 2 einen Corncracker 5 zum Aufbereiten von Kornbestandteile des Ernteguts 4 aufweist, der im Betrieb das Erntegut 4 zerkleinert, wobei der Corncracker 5 zwei Walzen 6 aufweist, die im Betrieb jeweils mit einer als Maschinenparameter einstellbaren Drehzahl rotieren, wobei zwischen den Walzen 6 ein Spalt 7 mit einer als Maschinenparameter einstellbaren Spaltbreite verbleibt, durch den das Erntegut 4 transportiert wird, und wobei die Walzen 6 eine als Maschinenparameter einstellbare Differenzdrehzahl aufweisen, um die sich die Drehzahl der Walzen 6 unterscheidet.

Es kann auch vorgesehen sein, dass der Corncracker 5 drei oder mehr als drei Walzen 6 aufweist, die im Betrieb jeweils mit einer als Maschinenparameter einstellbaren Drehzahl rotieren, und/oder, dass zwischen den Walzen 6 zwei oder mehr als zwei Spalte 7 mit einer, insbesondere jeweils, als Maschinenparameter einstellbaren Spaltbreite verbleibt, durch die das Erntegut 4 transportiert wird, vorzugsweise, dass die Walzen 6 eine als Maschinenparameter einstellbare Differenzdrehzahl aufweisen, um die sich die Drehzahl der Walzen 6 unterscheidet.

Vorzugsweise wird die Drehzahl der Einzugswalzen 8a und/oder die Drehzahl der Vorpresswalzen 8b und/oder der Anpressdruck der Vorpresswalzen 8b und/oder die Drehzahl der Häckseltrommel 11 und/oder die Motordrehzahl des Feldhäckslers 1 basierend auf den gefundenen Partikeln 12 mit Überlänge U eingestellt. Hier und vorzugsweise wird der Feldhäcksler 1 dabei zur Reduktion der Menge an Partikeln 12 mit Überlänge U von der Recheneinheit 14 angesteuert.

Weiterhin ist hier und vorzugsweise wie in Fig. 1 dargestellt vorgesehen, dass der Feldhäcksler 1 als Arbeitsaggregat 2 Einzugswalzen 8a und/oder Vorpresswalzen 8b, mit einer, insbesondere jeweils, als Maschinenparameter einstellbaren Drehzahl, und/oder eine Häckseltrommel 11 mit einer als Maschinenparameter einstellbaren Drehzahl aufweist.

Es kann vorgesehen sein, dass die Recheneinheit die Menge an Partikeln 12 mit Überlänge U durch Verändern mindestens eines Maschinenparameters als Stellgröße, insbesondere auf das Einhalten eines vorgegebenen Grenzwertes, regelt, vorzugsweise, dass die Stellgröße die Drehzahl der Einzugswalzen 8a und/oder die Drehzahl der Vorpresswalzen 8b und/oder der Anpressdruck der Vorpresswalzen 8b und/oder die Drehzahl der Häckseltrommel 11 ist.

Vorzugsweise wird die landwirtschaftliche Erntemaschine in Echtzeit basierend auf der Menge an Partikeln 12 mit Überlänge U gesteuert und/oder geregelt. Der Begriff "Echtzeit" ist in diesem Zusammenhang weit zu verstehen und bedeutet, dass das Empfangen der Daten bzw. Informationen in einen vorgegebenen Zeitraum ab dem Senden und/oder Generieren der Daten erfolgt, der höchstens eine halbe Stunde, bevorzugt höchstens wenige Sekunden, zum Beispiel höchstens 30 Sekunden, besonders bevorzugt höchstens wenige Bruchteile von Sekunden, zum Beispiel höchstens eine halbe Sekunde, beträgt.

Im Rahmen der Steuerung des Feldhäckslers 1 werden vorzugsweise mehrere Bilder 15 analysiert, die dann zusammen als Grundlage für die Steuerung dienen. Dabei kann blockweise vorgegangen werden oder auch ein laufender Mittelwert gebildet werden.

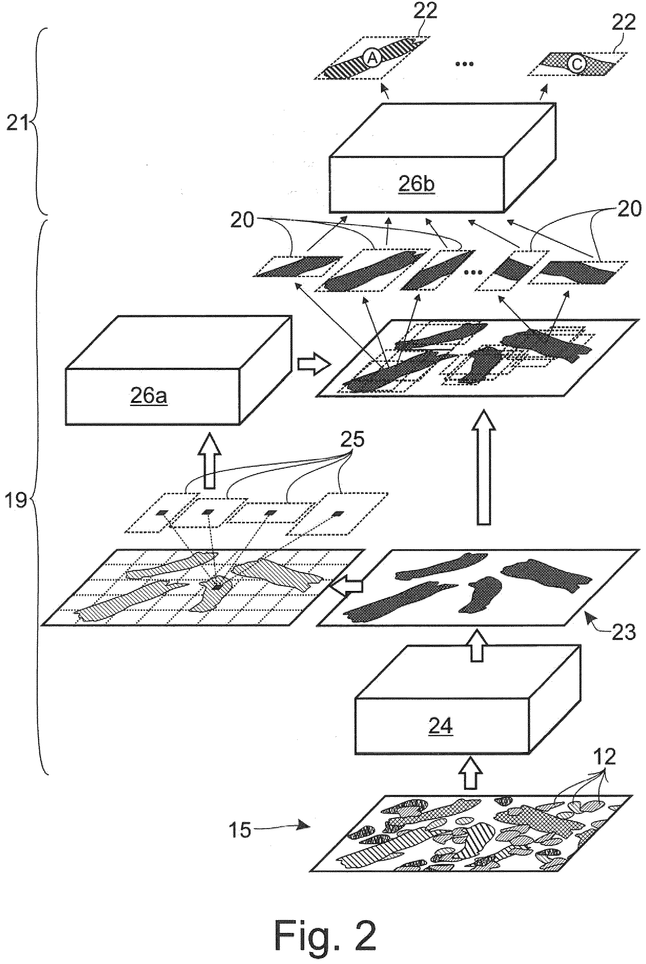

Die Analyseroutine und speziell ein bevorzugtes Maschinenlernverfahren wird nun anhand von Fig. 2 näher erläutert. Dabei ist es hier und vorzugsweise so, dass in einem Vorschlagsschritt 19 der Analyseroutine Vorschlagsregionen 20 identifiziert werden, die potenziell Partikel 12 mit Überlänge U enthalten. Die bevorzugte Ausführungsform des Vorschlagsschritts 19 wird im Folgenden noch dargestellt. Es darf jedoch hier darauf hingewiesen werden, dass grundsätzlich diverse bekannte Vorschlagsschritte 19 Anwendung finden können. Geeignete Algorithmen sind unter dem Begriff "region proposal" bekannt.

Anschließend werden vorzugsweise in einem Klassifikationsschritt 21 die Vorschlagsregionen 20 analysiert, insbesondere Klassifiziert, um aus den Vorschlagsregionen 20 Ergebnisregionen 22 zu ermitteln, die einen Partikel 12 mit Überlänge U enthalten.

Hier und vorzugsweise verwendet der Klassifikationsschritt 21 teilweise Berechnungen des Vorschlagsschritts 19 wieder. Diese Wiederverwendung ist beispielsweise aus dem "Faster R-CNN"-Algorithmus bekannt.

Allgemein ist es hier und vorzugsweise so, dass die Analyseroutine auf einem trainierten neuronalen Netzwerk als Maschinenlernverfahren basiert, vorzugsweise, dass das neuronale Netzwerk ein neuronales Faltungsnetzwerk ist. Neuronale Faltungsnetzwerke sind unter dem Begriff "convolutional neural network" bekannt.

Wie im Folgenden noch erläutert wird, ist es vorzugsweise so, dass der Vorschlagsschritt 19 und/oder der Klassifikationsschritt 21 auf einem trainierten neuronalen Netzwerk basieren. Vorzugsweise verwenden der Vorschlagsschritt 19 und der Klassifikationsschritt 21 teilweise dasselbe trainierte neuronale Netzwerk.

Hier und vorzugsweise basiert der Vorschlagsschritt 19 auf einem sogenannten "region proposal network". Es kann vorgesehen sein, dass der Vorschlagsschritt 19 die Anwendung eines Merkmalsextraktors ("feature extractor") direkt oder indirekt auf die Bilder 15 zum Generieren eines Merkmalsraums 23 umfasst. Der Merkmalsextraktor basiert hier und vorzugsweise auf einem Faltungsnetzwerk 24, wie dies insbesondere für neuronale Faltungsnetzwerke üblich ist. In Fig. 2 ist der Merkmalsraum 23, bekannt als "feature space" nur mit einer Ebene dargestellt, er umfasst jedoch vorzugsweise mehrere Ebenen.

Der Vorschlagsschritt 19 kann weiterhin die Anwendung von Ankerboxen 25, insbesondere auf jeden Pixel des Merkmalsraums 23, umfassen. Weiter kann der Vorschlagsschritt 19 die Anwendung eines klassifizierenden neuronalen Netzwerks 26a auf die Ankerboxen 25 umfassen, um aus den Ankerboxen 25 die Vorschlagsregionen 20 zu identifizieren.

Anhand von Fig. 2 läuft der Vorschlagsschritt 19 in der Summe also vorzugsweise so ab, dass ein Bild 15, insbesondere ein Farb-Bild, mit einer Mehrzahl trainierter Filter des Faltungsnetzwerks 24 in einen Merkmalsraum 23 überführt wird. Auf diesen Merkmalsraum 23 werden nach Art eines sliding window die Anker 25 angewendet, die in das klassifizierende neuronale Netzwerk 26a des Vorschlagsschritts 19 Eingang finden. Dieses ebenfalls trainierte Netzwerk 26a identifiziert die vielversprechendsten Kandidaten für Partikel 12 mit Überlänge U und gibt diese als Vorschlagsregionen 20 aus. Den Ankerboxen 25 ist dabei vorzugsweise ihre Position im ursprünglichen Bild 15 zugeordnet.

Der anschließende Klassifikationsschritt 21 ordnet vorzugsweise die Vorschlagsregionen 20 in Klassen ein, wobei mindestens eine Klasse Partikel 12 mit Überlängen U beinhaltet. Interessant ist vorliegend die Möglichkeit, dass mindestens eine Klasse akzeptable Partikel 12 mit Überlängen U und mindestens eine Klasse nichtakzeptable Partikel 12 mit Überlängen U beinhaltet. Bei der vorliegend im Vordergrund stehenden Anwendung auf einer landwirtschaftlichen Erntemaschine, insbesondere einem Feldhäcksler 1, existieren einige Partikel 12, insbesondere Blätter, die auf Grund ihrer Struktur beim Häckseln regelmäßig weniger zerkleinert werden. Da diese Partikel 12 mit Überlänge U entsprechend prozessinhärent sind, werden sie häufig akzeptiert.

Der Klassifikationsschritt 21 basiert hier und vorzugsweise ebenfalls auf einem klassifizierenden neuronalen Netzwerk 26b. Dieses ist vorzugsweise teilweise identisch mit dem klassifizierenden neuronalen Netzwerk 26a des Vorschlagsschritts 19. Sofern die Rede von einem neuronalen Netzwerk ist vorliegend vorzugsweise das Faltungsnetzwerk 24 und/oder das klassifizierenden neuronalen Netzwerk 26a des Vorschlagsschritts 19 und/oder das klassifizierenden neuronalen Netzwerk 26a des Klassifikationsschritts 21 gemeint.

Hier und vorzugsweise ordnet der Klassifikationsschritt 21 die Partikel 12 in mindestens drei Klassen und/oder in höchstens hundert Klassen, vorzugsweise höchstens fünfzig Klassen, weiter vorzugsweise höchstens zehn Klassen ein.

Vorliegend basieren der Vorschlagsschritt 19 und der Klassifikationsschritt 21 auf einem Maschinenlernverfahren. Es ist jedoch auch denkbar, dass nur einer von beiden Schritten 19, 21 auf einem Maschinenlernverfahren basiert. Beispielsweise sind Vorschlagsschritte 19 bekannt, die nicht auf einem Maschinenlernverfahren beruhen. Gleichzeitig ist auch die Möglichkeit interessant, bereits auf Basis der Vorschlagsregionen 20 die Menge an Partikeln 12 mit Überlänge U zu schätzen.

Allgemein ist es hier und vorzugsweise so, dass die Überlänge U relativ zu einer vorgegebenen Partikellänge L, insbesondere einer eingestellten Partikellänge L, definiert ist. Somit wird es notwendig, dass die Analyseroutine in der Lage ist, variierende Definitionen der Überlänge U zu berücksichtigen. Bezogen auf das vorliegende Ausführungsbeispiel ist es vorzugsweise so, dass die Überlänge U relativ zu einer theoretischen Schnittlänge TLOC des Feldhäckslers 1 definiert ist, vorzugsweise, dass die Überlänge U als 1,2 mal, vorzugsweise 1,4 mal, und/oder höchstens als 2 mal, vorzugsweise höchstens 1,7 mal, und/oder etwa 1,5 mal die theoretische Schnittlänge TLOC definiert ist. Bei den als zweites angegebenen Werten handelt es sich dabei nicht um einen Maximalwert für die Überlänge U, sondern um einen maximalen Schwellwert, ab dem eine Überlänge U beginnt. Vorzugsweise ist die Definition der Überlänge U auf der landwirtschaftlichen Erntemaschine einstellbar, wobei die Überlänge U sich relativ zu einer eingestellten Prozessgröße ergibt.

Es ist möglich, dass ein trainiertes Maschinenlernverfahren nicht für einen großen Bereich an Überlängen U konstant gute Ergebnisse erzielt. Es ist daher vorzugsweise so, dass die Recheneinheit 14 aus mindestens zwei trainierten Maschinenlernverfahren, vorzugsweise mindestens drei trainierten Maschinenlernverfahren, die jeweils auf unterschiedliche Überlängenbereiche trainiert sind, auswählt. Da sich die Maschinenlernverfahren vorzugsweise nur durch unterschiedliche Trainingsdatensätze 29, insbesondere Gewichte der neuronalen Verbindungen und/oder Ankerboxen 25, unterscheiden, steht eine Auswahl eines Maschinenlernverfahrens vorzugsweise einer Auswahl des Trainingsdatensatzes 29 gleich. Die Architektur des Maschinenlernverfahrens wird also vorzugsweise nicht verändert.

Vorzugsweise wählt die Recheneinheit 14 basierend auf einer extern vorgegebenen Länge, insbesondere Überlänge U und/oder theoretischen Schnittlänge TLOC, eines der Maschinenlernverfahren aus. Hier und vorzugsweise wählt die Recheneinheit 14 maximal aus dreißig, vorzugsweise maximal aus zwanzig, noch weiter vorzugsweise maximal aus zehn Maschinenlernverfahren oder Trainingsdatensätzen 29 aus.

Die theoretische Schnittlänge TLOC kann von dem Feldhäcksler 1 an die Recheneinheit 14 übergeben werden oder von der Recheneinheit 14 aus Maschinenparametern des Feldhäckslers 1 berechnet werden oder von einem Benutzer B eingestellt worden sein oder dergleichen, alternativ ist jedoch auch möglich, dass die Recheneinheit 14 die theoretische Schnittlänge TLOC aus den Bildern 15 schätzt. Dabei kann sie beispielsweise auf einen Teil des Maschinenlernverfahrens zurückgreifen.

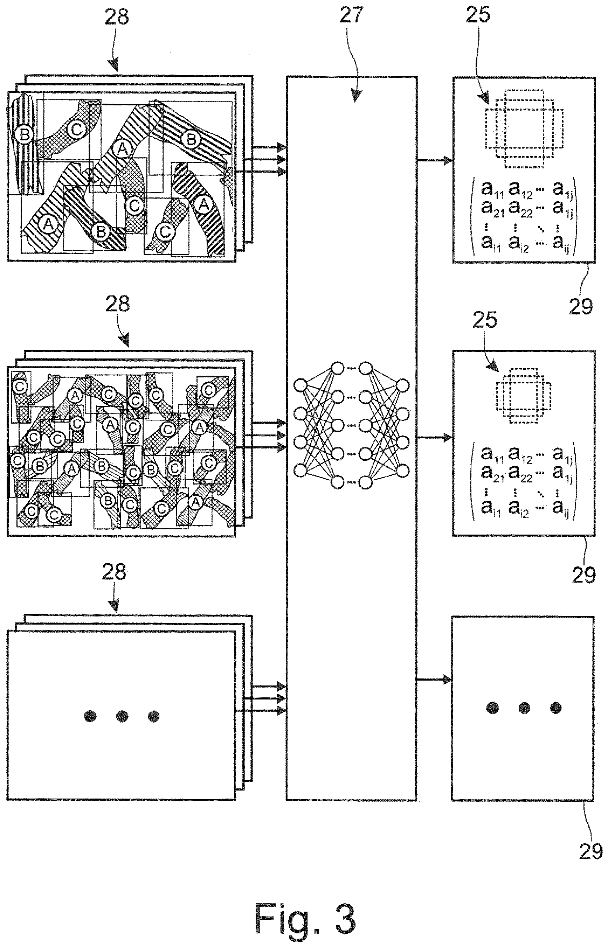

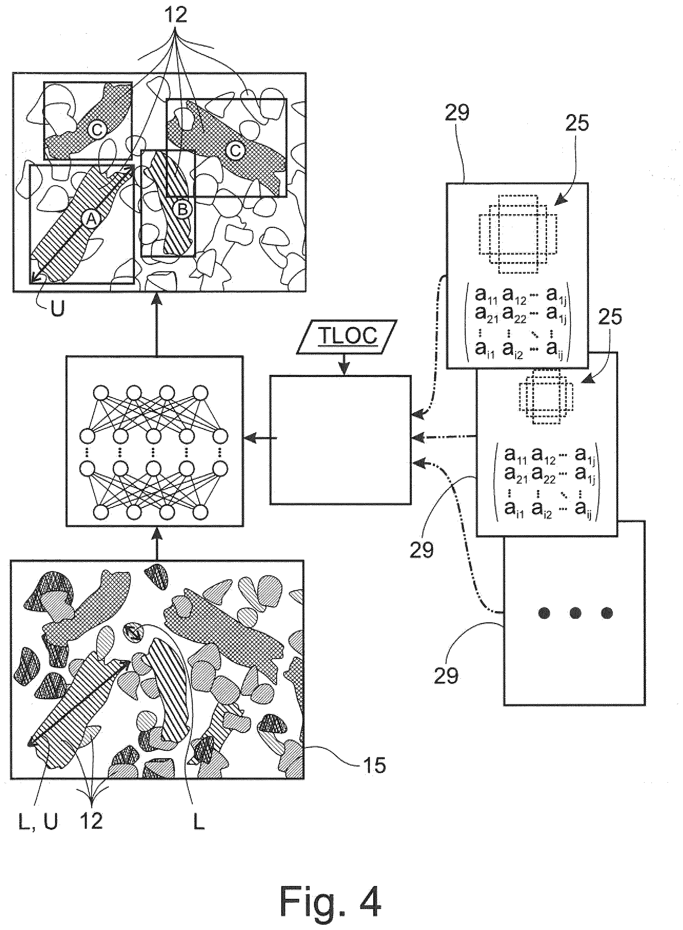

Fig. 3 zeigt das Training der verschiedenen Maschinenlernverfahren, wie es im Folgenden noch erläutert wird. Fig. 4 zeigt die gerade erläuterte Anwendung der verschiedenen Maschinenlernverfahren.

Das Maschinenlernverfahren wird oder wurde vorzugsweise in einem Trainingsschritt 27, insbesondere basierend auf annotierten Bildern 28 des Erntegutstroms 13 trainiert.

Das Ergebnis des Trainings ist ein Trainingsdatensatz 29. Dieser kann die Gewichte der neuronalen Netzwerke und/oder die Ankerboxen 25 beinhalten.

Es kann vorgesehen sein, dass in dem Trainingsschritt 27 ein allgemeines Training basierend auf annotierten Bildern 28 mit unterschiedlichen Definitionen von Überlänge U und vorzugsweise anschließend ein spezifisches Training für je eine Definition von Überlänge U durchgeführt wird, und/oder, dass in dem Trainingsschritt 27 nur ein spezifisches Training für je eine Definition von Überlänge U durchgeführt wird.

Hier und vorzugsweise basiert der Trainingsschritt 27 auf annotierten Bildern 28, die mit dem vordefinierten Abstand aufgenommen wurden. In den annotierten Bildern 28 wurden vorzugsweise nur oder im Wesentlichen Partikel 12 mit Überlänge U annotiert. Das Training ist entsprechend auf Überlängen U ausgerichtet.

Neben den Gewichten der neuronalen Netzwerke werden vorzugsweise auch die Ankerboxen 25 trainiert. Dabei können anhand der Überlänge U untere Grenzwerte für die Ankerboxen 25 festgelegt werden. Obergrenzen für die Größen der Ankerboxen 25 können anhand von realistisch bei den theoretischen Schnittlängen TLOC oder allgemein in einem Überlängenbereich auftretenden Maximum an Partikellängen L statistisch festgelegt werden.

Wie erwähnt, können in dem Trainingsschritt 27 die Ankerboxen 25, vorzugsweise zusammen mit dem neuronalen Netzwerk, insbesondere zusammen mit dem Faltungsnetzwerk 24 und/oder dem klassifizierenden neuronalen Netzwerk 26a, 26b, trainiert werden.

Der Trainingsschritt 27 kann durch eine Vorauswahl von Ankerboxen 25 als Ausgangspunkt für das Training verkürzt werden. Hier und vorzugsweise ist es so, dass als Ausgangspunkt für das Training der Ankerboxen 25 vorbestimmte Ankerboxen 25 verwendet werden und dass die vorbestimmten Ankerboxen 25 mittels eines Clustering-Verfahrens, insbesondere eines k-means-Verfahrens, aus Größen von ground truth Boxen der annotierten Bilder 28 generiert werden. Dabei werden vorzugsweise alle bounding Boxen der annotierten Bilder 28 zusammengenommen und mittels des Clustering-Verfahrens in eine gewünschte Anzahl an Mittelwertboxen überführt. Dies geschieht entsprechend unabhängig von den Bildern 15 und den neuronalen Netzwerken. Es kann vorgesehen sein, dass die vorbestimmten Ankerboxen 25 für mehrere theoretische Schnittlängen TLOC unterschiedlich ermittelt werden.

Weiterhin ist möglich, dass in dem Trainingsschritt 27 mindestens zwei unterschiedliche Trainingsdatensätze 29 abhängig von einer Pflanzenart und/oder einer Ernteperiode und/oder einem Erntewetter erzeugt werden. Diese werden vorzugsweise entsprechend spezifisch auf der landwirtschaftlichen Erntemaschine eingesetzt.

Auf technischer Ebene kann die Rechenintensität reduziert werden, wenn Gewichte des neuronalen Netzwerks, vorzugsweise des Faltungsnetzwerks 24 und/oder des klassifizierenden neuronalen Netzwerks 26a, 26b, mit einer Genauigkeit 8 oder 16 Bit, insbesondere von int8 oder int16 oder float8 oder float16, verwendet werden. Zusätzlich oder alternativ kann das neuronale Netzwerk, zumindest teilweise, auf einer Inception-Architektur, insbesondere einer Inception V2- oder Inception V3-Architektur basieren. Zusätzlich oder alternativ kann das neuronale Netzwerk mittels Tensorflow oder Tensorflow Lite verwendet werden oder trainiert werden oder trainiert worden sein.

Nach einer weiteren Lehre, der eigenständige Bedeutung zukommt, wird eine landwirtschaftliche Erntemaschine, insbesondere eine Feldhäcksler 1, mit einer Recheneinheit 14 und einer Kamera 16 eingerichtet zur Verwendung in dem vorschlagsgemäßen Verfahren vorgeschlagen. Auf alle Ausführungen zu dem vorschlagsgemäßen Verfahren darf verwiesen werden.

Nach einer weiteren Lehre, der ebenfalls eigenständige Bedeutung zukommt, wird ein Datenträger mit einem Trainingsdatensatz 29 zur Verwendung in dem vorschlagsgemäßen Verfahren erzeugt mittels des Trainingsschritts 27 vorgeschlagen. Auf alle Ausführungen zu dem vorschlagsgemäßen Verfahren darf verwiesen werden.

### Bezugszeichen

- 1: Feldhäcksler
- 2: Arbeitsaggregat
- 3: Feldbestand
- 4: Erntegut
- 5: Corncracker
- 6: Walzen des Corncrackers
- 7: Spalt des Corncrackers
- 8a: Vorpresswalzen
- 8b: Einzugswalzen
- 9: Motor
- 10: Vorsatzgerät
- 11: Häckseltrommel
- 12: Partikel
- 13: Erntegutstrom
- 14: Recheneinheit
- 15: Bild
- 16: Kamera
- 17: Optik
- 18: Auswurfkrümmer
- 19: Vorschlagsschritt
- 20: Vorschlagsregionen
- 21: Klassifikationsschritt
- 22: Ergebnisregionen
- 23: Merkmalsraum
- 24: Faltungsnetzwerk des Vorschlagsschritts
- 25: Ankerboxen
- 26a: klassifizierendes neuronales Netzwerk des Vorschlagsschritts
- 26b: klassifizierendes neuronales Netzwerk des Klassifikationsschritts
- 27: Trainingsschritt
- 28: annotierte Bilder
- 29: Trainingsdatensatz
- B: Benutzer
- L: Partikellänge
- U: Überlänge
- TLOC: theoretische Schnittlänge

## Patentansprüche

1. Verfahren zur Erkennung von Längen eines Partikels (12) in einem aus Partikeln (12) bestehenden Erntegutstrom (13) mittels einer Recheneinheit (14), bei einer landwirtschaftlichen Erntemaschine,
wobei die landwirtschaftliche Erntemaschine mindestens ein Arbeitsaggregat (2) zum Abernten eines Feldbestandes (3) und/oder zur Verarbeitung von Erntegut (4) des Feldbestandes (3) aufweist, wobei mindestens ein Arbeitsaggregat (2) mit Maschinenparametern einstellbar ist,
wobei das Erntegut (3) im Betrieb der landwirtschaftlichen Erntemaschine als Erntegutstrom (13) durch die landwirtschaftliche Erntemaschine transportiert wird,
wobei die landwirtschaftliche Erntemaschine eine Kamera (16) aufweist, die Bilder (15) des Erntegutstroms (13) aufnimmt,
wobei die Recheneinheit (14) eingerichtet ist, die Bilder (15) des Erntegutstroms (13) in einer Analyseroutine zu analysieren und mittels dieser Analyse Partikellängen von in den Bildern (15) enthaltenen Partikeln (12) des Erntegutstroms (13) abzuleiten,
**dadurch gekennzeichnet,**
**dass** die in der Analyseroutine abgeleitete Partikellänge eine Überlänge (U) relativ zu einer vorgegebenen Partikellänge ist und dass die Analyseroutine auf einem auf das Finden von Partikeln (12) mit Überlänge (U) trainiertem Maschinenlernverfahren basiert, dass die Recheneinheit in der Analyseroutine eine Menge an Partikeln mit Überlänge (U) ermittelt.

2. Verfahren nach Anspruch 1, **dadurch gekennzeichnet, dass** die Recheneinheit (14) basierend auf der Menge an Partikeln (12) mit Überlänge (U) mindestens einen Maschinenparameter der landwirtschaftlichen Erntemaschine einstellt und/oder die Menge an Partikeln (12) mit Überlänge (U) einem Benutzer (B) anzeigt und/oder dokumentiert.

3. Verfahren nach Anspruch 1 oder 2, **dadurch gekennzeichnet, dass** die landwirtschaftliche Erntemaschine ein Feldhäcksler (1) ist, vorzugsweise dass der Feldhäcksler (1) als Arbeitsaggregat (2) einen Corncracker (5) zum Aufbereiten von Kornbestandteile des Ernteguts (4) aufweist, der im Betrieb das Erntegut (4) zerkleinert, dass der Corncracker (5) zwei Walzen (6) aufweist, die im Betrieb jeweils mit einer als Maschinenparameter einstellbaren Drehzahl rotieren, dass zwischen den Walzen (6) ein Spalt (7) mit einer als Maschinenparameter einstellbaren Spaltbreite verbleibt, durch den das Erntegut (4) transportiert wird, und dass die Walzen (6) eine als Maschinenparameter einstellbare Differenzdrehzahl aufweisen, um die sich die Drehzahl der Walzen (6) unterscheidet.

4. Verfahren nach Anspruch 3, **dadurch gekennzeichnet, dass** der Corncracker (5) drei oder mehr als drei Walzen (6) aufweist, die im Betrieb jeweils mit einer als Maschinenparameter einstellbaren Drehzahl rotieren, und/oder, dass zwischen den Walzen (6) zwei oder mehr als zwei Spalte (7) mit einer, insbesondere jeweils, als Maschinenparameter einstellbaren Spaltbreite verbleibt, durch die das Erntegut (4) transportiert wird, vorzugsweise, dass die Walzen (6) eine als Maschinenparameter einstellbare Differenzdrehzahl aufweisen, um die sich die Drehzahl der Walzen (6) unterscheidet.

5. Verfahren nach Anspruch 3 oder 4, **dadurch gekennzeichnet, dass** der Feldhäcksler (1) als Arbeitsaggregat (2) Einzugswalzen (8a) und/oder Vorpresswalzen (8b), mit einer, insbesondere jeweils, als Maschinenparameter einstellbaren Drehzahl, und/oder eine Häckseltrommel (11) mit einer als Maschinenparameter einstellbaren Drehzahl aufweist.

6. Verfahren nach einem der vorhergehenden Ansprüche, **dadurch gekennzeichnet, dass** die Recheneinheit die Menge an Partikeln (12) mit Überlänge (U) durch Verändern mindestens eines Maschinenparameters als Stellgröße, insbesondere auf das Einhalten eines vorgegebenen Grenzwertes, regelt, vorzugsweise, dass die Stellgröße die Drehzahl der Einzugswalzen (8a) und/oder die Drehzahl der Vorpresswalzen (8b) und/oder der Anpressdruck der Vorpresswalzen (8b) und/oder die Drehzahl der Häckseltrommel (11) ist.

7. Verfahren nach einem der vorhergehenden Ansprüche, **dadurch gekennzeichnet, dass** in einem Vorschlagsschritt (19) der Analyseroutine Vorschlagsregionen (20) identifiziert werden, die potentiell Partikel (12) mit Überlänge (U) enthalten, vorzugsweise, dass in einem Klassifikationsschritt (21) die Vorschlagsregionen (20) analysiert, insbesondere klassifiziert, werden, um aus den Vorschlagsregionen (20) Ergebnisregionen (22) zu ermitteln, die einen Partikel (12) mit Überlänge (U) enthalten, weiter vorzugsweise, dass der Klassifikationsschritt (21) teilweise Berechnungen des Vorschlagsschritts (19) wiederverwendet.

8. Verfahren nach einem der vorhergehenden Ansprüche, **dadurch gekennzeichnet, dass** die Analyseroutine auf einem trainierten neuronalen Netzwerk als Maschinenlernverfahren basiert, vorzugsweise, dass das neuronale Netzwerk ein neuronales Faltungsnetzwerk ist, vorzugsweise, dass der Vorschlagsschritt (19) und/oder der Klassifikationsschritt (21) auf einem trainierten neuronalen Netzwerk basieren, weiter vorzugsweise, dass der Vorschlagsschritt (19) und der Klassifikationsschritt (21) teilweise dasselbe trainierte neuronale Netzwerk verwenden.

9. Verfahren nach Anspruch 7 und ggf. Anspruch 8, **dadurch gekennzeichnet, dass** der Vorschlagsschritt (19) die Anwendung eines Merkmalsextraktors, insbesondere basierend auf einem Faltungsnetzwerk (24), direkt oder indirekt auf die Bilder (15) zum Generieren eines Merkmalsraums (23) umfasst, vorzugsweise dass der Vorschlagsschritt (19) die Anwendung von Ankerboxen (25), insbesondere auf jeden Pixel des Merkmalsraums (23), umfasst, weiter vorzugsweise, dass der Vorschlagsschritt (19) die Anwendung eines klassifizierenden neuronalen Netzwerks (26a) auf die Ankerboxen (25) umfasst, um aus den Ankerboxen (25) Vorschlagsregionen (20) zu identifizieren.

10. Verfahren nach Anspruch 7 und ggf. einem der Ansprüche 8 oder 9, **dadurch gekennzeichnet, dass** der Klassifikationsschritt (21) die Vorschlagsregionen (20) in Klassen einordnet, wobei mindestens eine Klasse Partikel (12) mit Überlängen (U) beinhaltet, vorzugsweise, dass mindestens eine Klasse akzeptable Partikel (12) mit Überlängen (U) und mindestens eine Klasse nicht akzeptable Partikel (12) mit Überlängen (U) beinhaltet.

11. Verfahren nach einem der vorhergehenden Ansprüche, **dadurch gekennzeichnet, dass** die Überlänge (U) relativ zu einer eingestellten Partikellänge definiert ist, vorzugsweise, dass die Überlänge (U) relativ zu einer theoretischen Schnittlänge (TLOC) des Feldhäckslers (1) definiert ist, weiter vorzugsweise, dass die Überlänge (U) als mindestens 1,2 mal, vorzugsweise 1,4 mal, und/oder höchstens als 2 mal, vorzugsweise höchstens 1,7 mal, und/oder etwa 1,5 mal die theoretische Schnittlänge (TLOC) definiert ist.

12. Verfahren nach einem der vorhergehenden Ansprüche, **dadurch gekennzeichnet, dass** die Recheneinheit (14) aus mindestens zwei trainierten Maschinenlernverfahren, vorzugsweise mindestens drei trainierten Maschinenlernverfahren, insbesondere Trainingsdatensätzen (29) des gleichen Maschinenlernverfahrens, die jeweils auf unterschiedliche Überlängenbereiche trainiert sind, auswählt, vorzugsweise, dass die Recheneinheit (14) basierend auf einer extern vorgegebenen Länge, insbesondere Überlänge (U) oder und/oder theoretischen Schnittlänge (TLOC), eines der Maschinenlernverfahren auswählt.

13. Verfahren nach einem der vorhergehenden Ansprüche, **dadurch gekennzeichnet, dass** in einem Trainingsschritt (27) das Maschinenlernverfahren, insbesondere basierend auf annotierten Bildern (28) des Erntegutstroms (13), trainiert wurde oder trainiert wird, wobei das Ergebnis des Trainings ein Trainingsdatensatz (29) ist, vorzugsweise, dass in dem Trainingsschritt (27) ein allgemeines Training basierend auf annotierten Bildern (28) mit unterschiedlichen Definitionen von Überlänge (U) und vorzugsweise anschließend ein spezifisches Training für je eine Definition von Überlänge (U) durchgeführt wird, oder, dass in dem Trainingsschritt (27) ein spezifisches Training für je eine Definition von Überlänge (U) durchgeführt wird.

14. Verfahren nach den Ansprüchen 9 und 13, **dadurch gekennzeichnet, dass** die Ankerboxen (25) in dem Trainingsschritt (27), vorzugsweise zusammen mit dem neuronalen Netzwerk, insbesondere zusammen mit dem Faltungsnetzwerk (24) und/oder dem klassifizierenden neuronalen Netzwerk (26a, b), trainiert werden, vorzugsweise, dass als Ausgangspunkt für das Training der Ankerboxen (25) vorbestimmte Ankerboxen (25) verwendet werden und dass die vorbestimmten Ankerboxen (25) mittels eines clustering Verfahrens, insbesondere eines k-means Verfahrens, aus Größen von ground truth Boxen der annotierten Bilder (28) generiert werden.

15. Verfahren nach einem der Ansprüche 13 oder 14, **dadurch gekennzeichnet, dass** in dem Trainingsschritt mindestens zwei unterschiedliche Traingsdatensätze (29) abhängig von einer Pflanzenart und/oder einer Ernteperiode und/oder einem Erntewetter erzeugt werden.

16. Landwirtschaftliche Erntemaschine, insbesondere Feldhäcksler, mit einer Recheneinheit (14) und einer Kamera (16) eingerichtet zur Verwendung in dem Verfahren nach einem der Ansprüche 1 bis 15.

## Claims

1. A method for detecting lengths of a particle (12) in a flow of harvested material (13) consisting of particles (12) in an agricultural harvesting machine by means of a processing unit (14),
wherein the agricultural harvesting machine has at least one working assembly (2) for cutting down a field crop (3) and/or for processing harvested material (4) of the field crop (3), wherein at least one working assembly (2) can be adjusted with machine parameters,
wherein the harvested material (3) is transported through the agricultural harvesting machine as the flow of harvested material (13) while the agricultural harvesting machine is operating, wherein the agricultural harvesting machine has a camera (16) which acquires images (15) of the flow of harvested material (13),
wherein the processing unit (14) is configured to analyse the images (15) of the flow of harvested material (13) in an analysis routine and to derive particle lengths of the particles (12) of the flow of harvested material (13) contained in the images (15) by means of this analysis,
**characterized in that**
the particle length derived in the analysis routine is an excess length (U) relative to a predefined particle length and **in that** the analysis routine is based on a machine learning method trained to find particles (12) with an excess length (U), **in that** in the analysis routine, the processing unit determines a quantity of particles with an excess length (U).

2. The method according to claim 1, **characterized in that** on the basis of the quantity of particles (12) with an excess length (U), the processing unit (14) adjusts at least one machine parameter of the agricultural harvesting machine and/or indicates and/or documents the quantity of particles (12) with an excess length (U) to a user (B).

3. The method according to claim 1 or claim 2, **characterized in that** the agricultural harvesting machine is a forage harvester (1), preferably **in that** the forage harvester (1) has a corn cracker (5) for processing corn components of the harvested material (4) as the working assembly (2) and which comminutes the harvested material (4) during operation, **in that** the corn cracker (5) has two rollers (6) which, during operation, each rotate at a rotational speed which can be adjusted as a machine parameter, **in that** a gap (7) with a gap width which can be adjusted as a machine parameter remains between the rollers (6) and through which the harvested material (4) is transported, and **in that** the rollers (6) have an adjustable differential rotational speed by which the rotational speed of the rollers (6) differ as a machine parameter.

4. The method according to claim 3, **characterized in that** the corn cracker (5) has three or more than three rollers (6) which, during operation, each rotate at an adjustable rotational speed as a machine parameter, and/or **in that** two or more than two gaps (7) remain between the rollers (6) with a, in particular a respective, adjustable gap width as a machine parameter, through which the harvested material (4) is transported, preferably **in that** the rollers (6) have an adjustable differential rotational speed as a machine parameter by which the rotational speed of the rollers (6) differ.

5. The method according to claim 3 or claim 4, **characterized in that** the forage harvester (1) has feed rollers (8a) and/or pre-press rollers (8b) as the working assembly (2), with an adjustable, in particular respective, rotational speed as a machine parameter, and/or a chopper drum (11) with an adjustable rotational speed as a machine parameter.

6. The method according to one of the preceding claims, **characterized in that** the processing unit controls the quantity of particles (12) with an excess length (U) by varying at least one machine parameter as a manipulated variable, in particular to maintain a predefined boundary value, preferably **in that** the manipulated variable is the rotational speed of the feed rollers (8a) and/or the rotational speed of the preprocessing rollers (8b) and/or the contact pressure of the pre-press rollers (8b) and/or the rotational speed of the chopper drum (11).

7. The method according to one of the preceding claims, **characterized in that** in a proposal step (19) of the analysis routine, proposed regions (20) are identified which potentially contain particles with an excess length (U), preferably **in that** the proposed regions (20) are analysed, in particular classified, in a classification step (21) in order to determine from the proposed regions (20) result regions (22) which contain a particle (12) with an excess length (U), more preferably **in that** the classification step (21) partly re-uses calculations from the proposal step (19).

8. The method according to one of the preceding claims, **characterized in that** the analysis routine is based on a trained neural network as the machine learning method, preferably **in that** the neural network is a convolutional neural network, preferably **in that** the proposal step (19) and/or the classification step (21) is based on a trained neural network, more preferably in that the proposal step (19) and the classification step (21) partly use the same trained neural network.

9. The method according to claim 7 and claim 8 if appropriate, **characterized in that** the proposal step (19) comprises the use of a feature extractor, in particular based on a convolutional network (24), directly or indirectly on the images (15) in order to generate a feature map (23), preferably **in that** the proposal step (19) comprises the use of anchor boxes (25), in particular on every pixel of the feature map (23), more preferably **in that** the proposal step (19) comprises the use of a classifying neural network (26a) on the anchor boxes (25) in order to identify proposed regions (20) from the anchor boxes (25).

10. The method according to claim 7 and one of claims 8 or claim 9 if appropriate, **characterized in that** the classification step (21) categorises the proposed regions (20) into classes, wherein at least one class contains particles (12) with an excess length (U), preferably **in that** at least one class contains acceptable particles (12) with an excess length (U) and at least one class contains unacceptable particles (12) with an excess length (U).

11. The method according to one of the preceding claims, **characterized in that** the excess length (U) is defined relative to a preset particle length, preferably **in that** the excess length (U) is defined relative to a theoretical length of cut (TLOC) of the forage harvester (1), more preferably **in that** the excess length (U) is defined as at least 1.2 times, preferably 1.4 times, and/or at most 2 times, preferably at most 1.7 times, and/or approximately 1.5 times the theoretical length of cut (TLOC).

12. The method according to one of the preceding claims, **characterized in that** the processing unit (14) selects from at least two trained machine learning methods, preferably at least three trained machine learning methods, in particular training data sets (29) of the same machine learning method, which are respectively trained on different excess length ranges, preferably **in that** the processing unit (14) selects one of the machine learning methods based on an externally specified length, in particular an excess length (U) and/or theoretical length of cut (TLOC), .

13. The method according to one of the preceding claims, **characterized in that** the machine learning method has been trained or is trained in a training step (27), in particular based on annotated images (28) of the flow of harvested material (13), wherein the result of the training is a training data set (29), preferably **in that** in the training step (27), general training is carried out based on annotated images (28) with different definitions of excess length (U) and preferably, specific training is subsequently carried out for each one of the definitions of excess length (U), or **in that** in the training step (27), specific training is carried out for each one of the definitions of excess length (U).

14. The method according to claims 9 and 13, **characterized in that** the anchor boxes (25) are trained in the training step (27), preferably together with the neural network, in particular together with the convolutional network (24) and/or the classifying neural network (26a, b), preferably **in that** predefined anchor boxes (25) are used as a starting point for training the anchor boxes (25), and **in that** the predefined anchor boxes (25) are generated by means of a clustering method, in particular a k-means method, from sizes of ground truth boxes of the annotated images (28).

15. The method according to one of claims 13 or 14, **characterized in that** in the training step, at least two different training data sets (29) are generated as a function of a plant type and/or a harvesting period and/or harvesting weather.

16. An agricultural harvesting machine, in particular a forage harvester, with a processing unit (14) and a camera (16) configured for use in the method according to one of claims 1 to 15.

## Revendications

1. Procédé de détection de longueurs d'une particule (12) dans un flux de récolte (13) constitué de particules (12), au moyen d'une unité de calcul (14), dans une machine de récolte agricole,
la machine de récolte agricole présentant au moins un organe de travail (2) pour la récolte des végétaux d'un champ (3) et/ou pour le traitement de produits récoltés (4) des végétaux du champ (3), sachant qu'au moins un organe de travail (2) peut être réglé avec des paramètres machine,
la récolte (3) étant transportée sous forme de flux de récolte (13) à travers la machine de récolte agricole, lors du fonctionnement de la machine de récolte agricole,
la machine de récolte agricole présentant une caméra (16) qui enregistre des images (15) du flux de récolte (13),
l'unité de calcul (14) étant agencée pour analyser les images (15) du flux de récolte (13) dans une routine d'analyse et pour déduire, à l'aide de cette analyse, des longueurs des particules (12) du flux de récolte (13) contenues dans les images (15),
**caractérisé en ce que**
la longueur de particules déduite dans la routine d'analyse est une surlongueur (U) par rapport à une longueur de particule prédéfinie, et **en ce que** la routine d'analyse est basée sur un procédé d'apprentissage automatique entraîné en vue de la détection de particules (12) présentant une surlongueur (U), **en ce que** l'unité de calcul détermine dans la routine d'analyse une quantité de particules présentant une surlongueur (U).

2. Procédé selon la revendication 1, **caractérisé en ce que**, sur la base de la quantité de particules (12) à surlongueur (U), l'unité de calcul (14) règle au moins un paramètre machine de la machine de récolte agricole et/ou indique et/ou documente la quantité de particules (12) présentant une surlongueur (U), à destination d'un utilisateur (B).

3. Procédé selon la revendication 1 ou 2, **caractérisé en ce que** la machine de récolte agricole est une ensileuse (1), de préférence que l'ensileuse (1) présente, en tant qu'organe de travail (2), un éclateur de grains (5) qui est destiné au conditionnement des constituants grains de la récolte (4) et qui broie la récolte (4) lors du fonctionnement, **en ce que** l'éclateur de grains (5) présente deux rouleaux (6) qui, lors du fonctionnement, tournent chacun à une vitesse de rotation réglable en tant que paramètre machine, **en ce qu'**un interstice (7), d'une largeur d'interstice réglable en tant que paramètre machine, subsiste entre les rouleaux (6), à travers lequel est transportée la récolte (4), et **en ce que** les rouleaux (6) présentent une vitesse de rotation différentielle qui peut être réglée en tant que paramètre machine et qui constitue la différence entre les vitesses de rotation des rouleaux (6).

4. Procédé selon la revendication 3, **caractérisé en ce que** l'éclateur de grains (5) présente trois ou plus de trois rouleaux (6) qui, lors du fonctionnement, tournent chacun à une vitesse de rotation réglable en tant que paramètre machine, et/ou **en ce que** deux ou plus de deux interstices (7), d'une largeur d'interstice pouvant notamment être réglée en tant que paramètre machine, subsistent entre les rouleaux (6), interstices à travers lesquels est transportée la récolte (4), de préférence **en ce que** les rouleaux (6) présentent une vitesse de rotation différentielle qui peut être réglée en tant que paramètre machine et qui constitue la différence entre les vitesses de rotation des rouleaux (6).

5. Procédé selon la revendication 3 ou 4, **caractérisé en ce que** l'ensileuse (1) présente, en tant qu'organe de travail (2), des rouleaux d'alimentation (8a) et/ou des rouleaux de précompression (8b) présentant une vitesse de rotation pouvant en particulier être réglée respectivement en tant que paramètre machine, et/ou un tambour hacheur (11) avec une vitesse de rotation pouvant être réglée en tant que paramètre machine.

6. Procédé selon l'une des revendications précédentes, **caractérisé en ce que** l'unité de calcul (14) règle la quantité de particules (12) à surlongueur (U), en modifiant au moins un paramètre machine en tant que grandeur réglante, notamment en vue du respect d'une valeur limite prédéfinie, de préférence **en ce que** la grandeur réglante est la vitesse de rotation des rouleaux d'alimentation (8a) et/ou la vitesses de rotation des rouleaux de précompression (8b) et/ou la pression d'appui des rouleaux de précompression (8b) et/ou la vitesse de rotation du tambour hacheur (11).

7. Procédé selon l'une des revendications précédentes, **caractérisé en ce que** lors d'une étape de suggestion (19) de la routine d'analyse, des régions de suggestion (20) sont identifiées, qui contiennent potentiellement des particules (12) à surlongueur (U), de préférence **en ce que** lors d'une étape de classification (21), les régions de suggestion (20) sont analysées, notamment classifiées, afin de déterminer, à partir des régions de suggestion (20), des régions de résultat (22) contenant une particule (12) à surlongueur (U), et en outre de préférence **en ce que** l'étape de classification (21) réutilise en partie des calculs de l'étape de suggestion (19).

8. Procédé selon l'une des revendications précédentes, **caractérisé en ce que** la routine d'analyse est basée sur un réseau neuronal entraîné, en tant que procédé d'apprentissage automatique, de préférence **en ce que** le réseau neuronal est un réseau neuronal convolutif, de préférence **en ce que** l'étape de suggestion (19) et/ou l'étape de classification (21) sont basées sur un réseau neuronal entraîné, en outre de préférence **en ce que** l'étape de suggestion (19) et l'étape de classification (21) utilisent en partie le même réseau neuronal entraîné.

9. Procédé selon la revendication 7 et le cas échéant selon la revendication 8, **caractérisé en ce que** l'étape de suggestion (19) comprend l'application d'un extracteur de caractéristiques, notamment sur la base d'un réseau convolutif (24), directement ou indirectement aux images (15), aux fins de générer un espace de caractéristiques (23), de préférence **en ce que** l'étape de suggestion (19) comprend l'application de boîtes d'ancrage (25), notamment à chaque pixel de l'espace de caractéristiques (23), en outre de préférence **en ce que** l'étape de suggestion (19) comprend l'application d'un réseau neuronal classifiant (26a) aux boîtes d'ancrage (25), afin d'identifier des régions de suggestion (20) à partir des boîtes d'ancrage (25).

10. Procédé selon la revendication 7 et le cas échéant selon l'une des revendications 8 ou 9, **caractérisé en ce que** l'étape de classification (21) range les régions de suggestion (20) en classes, sachant qu'au moins une classe contient des particules (12) à surlongueur (U), de préférence **en ce qu'**au moins une classe contient des particules (12) acceptables à surlongueur (U) et au moins une classe contient des particules (12) non acceptables à surlongueur (U).

11. Procédé selon l'une des revendications précédentes, **caractérisé en ce que** la surlongueur (U) est définie par rapport à une longueur de particule réglée, de préférence **en ce que** la surlongueur (U) est définie par rapport à une longueur de coupe théorique (TLOC) de l'ensileuse (1), en outre de préférence **en ce que** la surlongueur (U) est définie comme correspondant au moins à 1,2 fois, de préférence à 1,4 fois et/ou au maximum à 2 fois, de préférence au maximum à 1,7 fois et/ou environ à 1,5 fois la longueur de coupe théorique (TLOC).

12. Procédé selon l'une des revendications précédentes, **caractérisé en ce que** l'unité de calcul (14) choisit parmi au moins deux procédés d'apprentissage automatique entraînés, de préférence au moins trois procédés d'apprentissage automatique entraînés, notamment des jeux de données d'entraînement (29) du même procédé d'apprentissage automatique, qui sont respectivement entraînés pour des plages de surlongueurs différentes, de préférence **en ce que** l'unité de calcul (14) sélectionne l'un des procédés d'apprentissage automatique, sur la base d'une longueur prédéfinie de l'extérieur, notamment d'une surlongueur (U) et/ou de la longueur de coupe théorique (TLOC).

13. Procédé selon l'une des revendications précédentes, **caractérisé en ce que** lors d'une étape d'entraînement (27), le procédé d'apprentissage automatique était ou est entraîné, notamment sur la base d'images annotées (28) du flux de récolte (13), le résultat de l'entraînement étant un jeu de données d'entraînement (29), de préférence **en ce qu'**à l'étape d'entraînement (27), un entraînement général est effectué sur la base d'images annotées (28) avec des définitions différentes de la surlongueur (U), et de préférence un entraînement spécifique est ensuite effectué respectivement pour une définition de la surlongueur (U), ou **en ce qu'**à l'étape d'entraînement (27) un entraînement spécifique est effectué respectivement pour une définition de la surlongueur (U).

14. Procédé selon les revendications 9 et 13, **caractérisé en ce que** les boîtes d'ancrage (25) sont entraînées à l'étape d'entraînement (27), de préférence conjointement avec le réseau neuronal, en particulier conjointement avec le réseau convolutif (24) et/ou le réseau neuronal classifiant (26a, b), de préférence **en ce que** des boîtes d'ancrage (25) prédéterminées sont utilisées comme point de départ pour l'entraînement des boîtes d'ancrage (25), et **en ce que** les boîtes d'ancrage (25) prédéterminées sont générées au moyen d'un procédé de regroupement (clustering), notamment d'un procédé k-means, à partir de grandeurs de boîtes de réalité terrain (ground truth) des images annotées (28).

15. Procédé selon l'une des revendications 13 ou 14, **caractérisé en ce que**, à l'étape d'entraînement, au moins deux jeux de données d'entraînement (29) différents sont générés en fonction d'un type de plante et/ou d'une période de récolte et/ou de conditions météorologiques de récolte.

16. Machine de récolte agricole, en particulier ensileuse, comprenant une unité de calcul (1') et une caméra (16), agencée en vue de l'utilisation dans le procédé selon l'une des revendications 1 à 15.
